# EUROPEAN PATENT APPLICATION

(11) **EP 4 730 361 A1**
(43) Date of publication of application: **22.04.2026**
(21) Application number: 25209786.0
(22) Date of filing: 20.10.2025
(51) Int. Cl.: G21C 17/01, G21C 17/013, G01N 1/08

(54) **REACTOR SAMPLING DEVICE**

(30) Priority: 21.10.2024 KR 20240143948
(71) Applicant: Doosan Enerbility Co., Ltd., Seongsan-gu Changwon-si, Gyeongsangnam-do 51711 (KR)
(72) Inventor: KIM, Haewoong, 51319 Changwon-si, Gyeongsangnam-do (KR); NAM, Ho Seok, 46597 Busan (KR); PARK, Kwang Soo, 02225 Seoul (KR)
(74) Representative: BCKIP Part mbB

(57) **Abstract**

Proposed is a reactor (10) sampling device for collecting samples from an inner wall of a reactor, the device including a main body part (100) having a receiving space (100a) and an opening part (100b) disposed to be in close contact with the inner wall, a sampling tool part (200) disposed in the receiving space of the main body part and having a tool head (211) configured to collect samples from the inner wall of the reactor through the opening part, a vertical movement part (300) connected to the main body part and configured to move the main body part upward and downward, and a sample discharge part (400) communicating with the receiving space and configured to discharge the samples collected by the sampling tool part to the outside of the main body part.

## Description

The present application claims priority to Korean Patent Application No. 10-2024-0143948, filed on October 21, 2024.

### BACKGROUND

### 1. Technical Field

The present disclosure relates to a reactor sampling device that collects depth-specific samples from the inner wall of a reactor during nuclear power plant decommissioning.

### 2. Description of the Background Art

In general, in order to evaluate the characteristics of an on-site and activated equipment and structures during decommissioning of a nuclear power plant, samples must be collected for radioactive nuclides and chemical analysis on the metal surfaces of activated structures such as a reactor and primary system equipment.

One method for collecting internal samples is to collect samples by using smear paper and then measure the samples by using a detector. However, this method carries a high risk of radiation exposure because a person must directly rub a contaminated area with the smear paper to collect a contaminated sample.

For this reason, recently, a sampling device that collects a sample cut into a one-piece shape through electrical discharge machining (EDM) has been used.

However, in the case of the sampling device that collects samples by cutting the samples by using electric discharge machining, when samples are collected underwater inside a reactor, the samples are mixed with contaminated water, making accurate measurement of the samples difficult. In addition, there are limitations in collecting samples from different depths of the inner wall of the reactor.

The related technology for sampling devices used for activated structures is disclosed in Korean Patent No. 10-1646598 (2016.08.02).

### SUMMARY

Accordingly, the present disclosure has been made keeping in mind the above problems occurring in the related art, and an objective of the present disclosure is to provide a reactor sampling device that prevents samples from mixing with contaminated water inside a reactor and enables the collection of depth-specific samples from the inner wall of the reactor.

In order to achieve the above objective, according to an embodiment of the present disclosure, there is provided a reactor sampling device for collecting samples from an inner wall of a reactor, the device including: a main body part having a receiving space and an opening part disposed to be in close contact with the inner wall; a sampling tool part disposed in the receiving space of the main body part and having a tool head configured to collect samples from the inner wall of the reactor through the opening part; a vertical movement part connected to the main body part and configured to move the main body part upward and downward; and a sample discharge part communicating with the receiving space and configured to discharge the samples collected by the sampling tool part to the outside of the main body part.

In addition, the main body part may be provided with an intake port and a sample discharge port which communicate with the receiving space.

In addition, the main body part may include an intake injection space that communicates with the intake port and is provided with a plurality of nozzle holes.

In addition, an inner bottom of the main body part may include a discharge guide provided with a downwardly inclined slope.

In addition, the discharge guide may be disposed at a lower side of the opening part.

In addition, the device may further include: a fixing part connected to the main body part and configured to maintain the main body part, which is in close contact with the inner wall of the reactor, in a fixed state.

In addition, the fixing part may include: a fixing body having an adjustable length; and a fixing driving means connected to the fixing body and configured to generate a driving force to adjust the length of the fixing body.

In addition, the device may further include: a sealing means provided on the main body part for sealing between the main body part and the inner wall of the reactor.

In addition, the sampling tool part may include: a tool body configured to support the tool head so that the tool head is rotatable, with the tool body disposed in the receiving space of the main body part so as to be slidably moved in a horizontal direction; a sampling driving means connected to the tool head and configured to generate a driving force to rotate the tool head; and a sampling moving means configured to generate a driving force to cause the tool body to slide within the receiving space.

In addition, the sample discharge part may include: an intake line that communicates with the receiving space; an exhaust line that communicates with the receiving space; an external air supply means disposed on the intake line and configured to supply outside air to the receiving space of the main body part; and a sample discharge means disposed on the exhaust line and configured to generate back pressure to discharge samples inside the receiving space of the main body part through the exhaust line.

In addition, the device may further include: a controller configured to control operations of the sampling tool part and the sample discharge part.

In addition, the controller may control a depth to which the sampling tool part is inserted into the inner wall of the reactor according to a material of the inner wall of the reactor.

In addition, the controller may control the operation of the sampling tool part to adjust a depth to which the tool head of the sampling tool part is into the inner wall of the reactor when collecting samples from the inner wall of the reactor, and the operation of the sample discharge part to discharge the samples to the outside of the main body part after the samples are completely collected from the inner wall of the reactor by the tool head.

In addition, the controller may perform a cleaning operation to discharge remaining samples from within the receiving space of the main body part to the outside when collecting samples from different target depths of the inner wall of the reactor.

In the reactor sampling device according to the present disclosure, the main body part is disposed such that the opening part is in close contact with the inner wall of the reactor, and through the sampling tool part arranged within the receiving space of the main body part, samples are collected at various depths of the inner wall of the reactor. The samples collected from the sampling tool part can be discharged to the outside of the reactor through the sample discharge part without mixing with contaminated water inside the reactor.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 shows the configuration diagram of a reactor sampling device according to an embodiment of the present disclosure;
FIG. 2 shows the operating state diagram of the reactor sampling device according to the embodiment of the present disclosure;
FIG. 3 is an enlarged view of part "A" shown in FIG. 2; and
FIG. 4 is a partial cross-sectional view of a reactor sampling device according to another embodiment of the present disclosure.

### DETAILED DESCRIPTION

Hereinafter, exemplary embodiments of the present disclosure will be described in detail with reference to the accompanying drawings. Prior to this, terms and words used in this specification and claims should not be construed as limited to their usual or dictionary meanings, and based on the principle that the inventor can appropriately define the concepts of the terms in order to explain his or her invention in the best way, the terms are required to be interpreted as meanings and concepts consistent with the technical idea of the present disclosure.

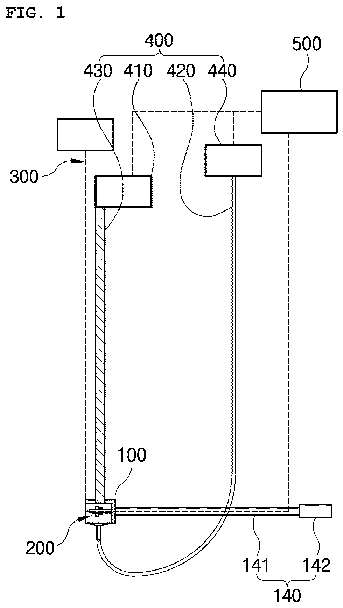

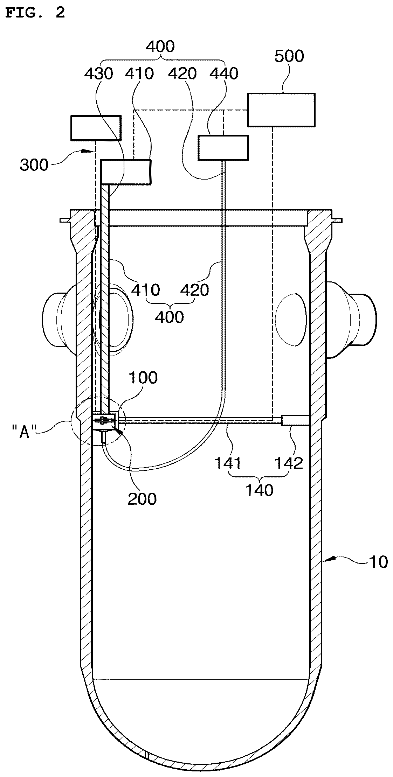

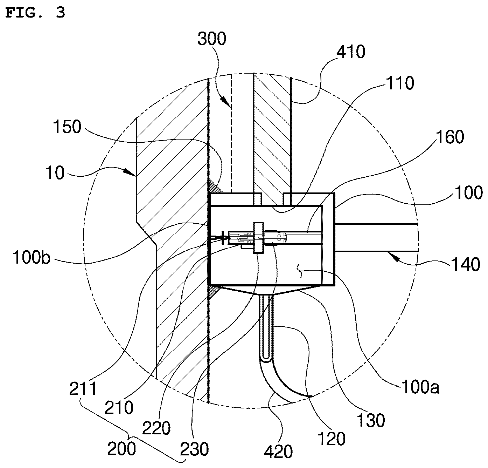

Referring to FIGS. 1 to 4, a reactor sampling device according to an embodiment of the present disclosure may include a main body part 100, a sampling tool part 200, a vertical movement part 300, and a sample discharge part 400.

The main body part 100 may be disposed to be in close contact with the inner wall of a reactor 10.

The main body part 100 may be provided with a receiving space 100a for storing samples collected by the operation of the sampling tool part 200 while accommodating the sampling tool part 200.

The main body part 100 may have a hexahedral shape, and include an opening part 100b, which communicates with the receiving space 100a, provided on a portion facing the inner wall of the reactor 10. The opening part 100b allows a tool head 211 of the sampling tool part 200 to protrude from the receiving space 100a to the outside of the main body part 100, enabling the tool head 211 to collect samples from the inner wall of the reactor 10 and allowing the collected samples to be accommodated in the receiving space 100a.

In addition, the main body part 100 may be provided with an intake port 110 and a sample discharge port 120 which communicate with the receiving space 100a.

For example, the intake port 110 may be arranged on the upper surface of the main body part 100, and the sample discharge port 120 may be arranged on the lower surface of the main body part 100.

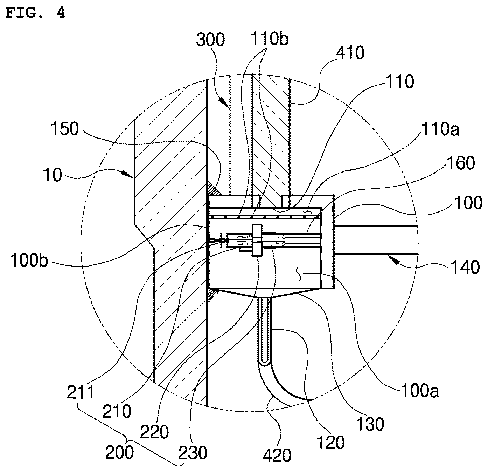

Referring to FIG. 4, an intake injection space 110a communicating with the intake port 110 may be provided on the upper surface of the main body part 100.

In addition, a plurality of nozzle holes 110b communicating with the intake injection space 110a may be provided, so that outside air introduced into the intake injection space 110a through the intake port 110 may be evenly injected into the receiving space 100a of the main body part 100 through the nozzle holes 110b. The nozzle holes 110b may allow the outside air introduced into the receiving space 100a to be sprayed throughout the receiving space 100a, thereby preventing samples accommodated in the receiving space 100a from remaining attached to the inner surface of the main body part 100 and allowing the samples to be completely discharged through the sample discharge port 120.

In addition, a downwardly inclined slope 130 may be provided on the inner bottom of the main body part 100.

For example, the inclined slope 130 is disposed at the lower side of the opening part 100b and guides samples collected by the tool head 211 of the sampling tool part 200 to move toward the sample discharge port 120 by free fall under gravity.

Furthermore, the main body part 100 may be provided with a fixing part 140 connected to the main body part 100. The fixing part 140 maintains the main body part 100, which is disposed to be in close contact with the inner wall of the reactor 10, in a fixed state.

For example, the fixing part 140 may include a fixing body 141 and a fixing driving means 142.

The fixing body 141 has a length-adjustable structure. For example, the fixing body 141 may be configured as a telescopic structure.

Accordingly, a first longitudinal end of the fixing body 141 may be connected to the main body part 100. In addition, a second longitudinal end of the fixing body 141 may be disposed to be in contact with the inner wall of the reactor 10.

The fixing driving means 142 may be connected to the fixing body 141.

Accordingly, the fixing driving means 142 generates a driving force to adjust the length of the fixing body 141.

For example, the fixing driving means 142 may be a hydraulic cylinder. When the fixing driving means 142 is applied as a hydraulic cylinder, the body portion of the hydraulic cylinder may be disposed at the first longitudinal end of the fixing body 141, and an end of the rod of the hydraulic cylinder may be connected to the second longitudinal end of the fixing body 141. Through this configuration, the length of the fixing body 141 may be adjusted by the change in the length of the rod according to the operation of the hydraulic cylinder, and the main body part 100 may be pressed toward the inner wall of the reactor 10 through the length change of the fixing body 141 by the hydraulic cylinder, thereby maintaining a stable fixed state thereof.

In addition, a sealing means 150 may be disposed on the main body part 100 for sealing between the main body part 100 and the inner wall of the reactor 10 when the main body part 100 is disposed to be in close contact with the inner wall of the reactor 10.

For example, the sealing means 150 may be a suction pad that is arranged along the periphery of the contact surface of the main body part 100, which is in close contact with the inner wall of the reactor 10.

Furthermore, a horizontal guide 160 may be provided inside the main body part 100 to guide a tool body 210 of the sampling tool part 200 to be movable in a horizontal direction within the receiving space 100a.

The sampling tool part 200 may be disposed in the receiving space 100a of the main body part 100.

Accordingly, the sampling tool part 200 penetrates into the inner wall of the reactor 10 and collects samples from the inner wall.

The sampling tool part 200 may include the tool body 210, a sampling driving means 220, and a sampling moving means 230.

The tool body 210 may be disposed to be slidably movable in the horizontal direction within the receiving space 100a of the main body part 100. That is, the tool body 210 may be slidably connected to the horizontal guide 160 of the main body part 100.

In addition, the tool head 211 may be rotatably mounted on the tool body 210 to penetrate into the inner wall of the reactor 10 by rotation thereof.

For example, the tool head may be implemented as one of a drill bit and an end mill.

The sampling driving means 220 may be disposed on the tool body 210 to be connected to the tool head 211.

Accordingly, the sampling driving means 220 generates a driving force to rotate the tool head 211, enabling the tool head 211 to penetrate into the inner wall of the reactor 10 and collect samples.

For example, the sampling driving means 220 may be a motor.

The sampling moving means 230 may be connected to the tool body 210.

Accordingly, the sampling moving means 230 generates a driving force to slidably move the tool body 210 on the horizontal guide 160 within the receiving space 100a.

The sampling moving means 230 allows the tool body 210 to be slidably moved on the horizontal guide 160, enabling adjustment of depth to which the tool head 211 is inserted into the inner wall of the reactor 10.

For example, the sampling moving means 230 may be a hydraulic cylinder. When the sampling moving means 230 is applied as a hydraulic cylinder, the body portion of the hydraulic cylinder may be disposed on the main body part 100, and the end of the rod of the hydraulic cylinder may be connected to the tool body 210. Through this configuration, the horizontal position of the tool body 210 may be adjusted according to the change in the length of the rod by operation of the hydraulic cylinder.

For another example, the sampling moving means 230 may be implemented with a rack-and-pinion gear and a motor. In this case, a rack gear may be disposed on the horizontal guide 160, and a pinion gear may be disposed on the tool body 210 to engage with the rack gear. In addition, the motor may be disposed on the tool body 210 and connected to the pinion gear. Through this configuration, the position of the tool body 210 may be adjusted on the horizontal guide 160 according to the rotational direction of the pinion gear driven by the motor.

The vertical movement part 300 may be connected to the main body part 100.

Accordingly, the vertical movement part 300 moves the main body part 100 upward or downward to adjust a vertical position thereof on the inner wall of the reactor 10 from which samples are collected by the sampling tool part 200.

For example, the vertical movement part 300 may be a hydraulic cylinder connected to the main body part 100. When the vertical movement part 300 is applied as a hydraulic cylinder, the body portion of the hydraulic cylinder may be disposed on the upper outside of the reactor 10, and the end of the rod of the hydraulic cylinder may be connected to the main body part 100. Through this configuration, the vertical position of the main body part 100 may be adjusted according to the change in the length of the rod by operation of the hydraulic cylinder.

For another example, the vertical movement part 300 may be implemented with a rack-and-pinion gear and a motor. In this case, a rack gear may be vertically disposed, with a lower end thereof connected to the main body part 100 and an upper end thereof disposed on the upper outside of the reactor 10. In addition, a pinion gear may be disposed on the main body part 100 to engage with the rack gear. In addition, the motor may be disposed on the main body part 100 and connected to the pinion gear. Through this configuration, the main body part 100 can be moved upward or downward along the rack gear according to the rotational direction of the pinion gear driven by the motor.

For another example, the vertical movement part 300 may be implemented with a lifting reel and a lifting wire.

In this case, the lifting reel may be disposed on the upper outside of the reactor 10, and one longitudinal end of the lifting wire, which is wound around the lifting reel, may be connected to the main body part 100. Through this configuration, the main body part 100 can be moved up or down by winding or unwinding the lifting wire according to the rotational direction of the lifting reel.

The sample discharge part 400 may communicate with the receiving space 100a of the main body part 100.

Accordingly, the sample discharge part 400 discharges samples collected by the sampling tool part 200 to the outside of the main body part 100.

The sample discharge part 400 may include an intake line 410, an exhaust line 420, an external air supply means 430, and a sample discharge means 440.

The intake line 410 and the exhaust line 420 are pipe members communicating with the receiving space 100a of the main body part 100. The intake line 410 guides external air from outside the reactor 10 to be supplied into the receiving space 100a of the main body part 100, while the exhaust line 420 guides air inside the main body part 100 and samples collected by the sampling tool part 200 to be discharged outside the reactor 10.

Accordingly, a first longitudinal end of the intake line 410 communicates with the intake port 110 of the main body part 100, and a second longitudinal end of the intake line 410 may be connected to the external air supply means 430 disposed outside the reactor 10.

In addition, a first longitudinal end of the exhaust line 420 communicates with the sample discharge port 120 of the main body part 100, and a second longitudinal end of the exhaust line 420 may be connected to the sample discharge means 440 disposed outside the reactor 10.

In addition, a sample storage container (not shown) capable of holding samples may be detachably provided on the second longitudinal end of the exhaust line 420.

The external air supply means 430 may be disposed on the intake line 410. The external air supply means 430 may be connected to the intake line 410 disposed outside the reactor 10.

For example, the external air supply means 430 may be a blower fan or a blower pump.

The sample discharge means 440 may be disposed on the exhaust line 420. The sample discharge means 440 may be connected to the exhaust line 420 disposed outside the reactor 10.

For example, the sample discharge means 440 may be a suction pump.

Here, the reactor sampling device according to an embodiment may further include a controller 500 configured to control the operations of the sampling tool part 200 and the sample discharge part 400.

Accordingly, the controller 500 controls the operations of the sampling tool part 200 and the sample discharge part 400, thereby allowing different samples to be collected by adjusting depth to which the tool head 211 of the sampling tool part 200 is inserted into the inner wall of the reactor 10 according to the material of the inner wall of the reactor 10.

Accordingly, when collecting samples from the inner wall of the reactor 10, the controller 500 controls the operations of the sampling driving means 220 and the sampling moving means 230 of the sampling tool part 200 so that the insertion depth of the tool head 211 of the sampling tool part 200 into the inner wall of the reactor 10 can be adjusted. In addition, the controller 500 controls the operations of the external air supply means 430 and the sample discharge means 440 of the sample discharge part 400 so that the samples collected from the inner wall of the reactor 10 by the tool head 211 of the sampling tool part 200 are discharged to the outside of the main body part 100 after the sample collection is completed.

In addition, after samples are collected from the inner wall of the reactor 10, the controller 500 may perform a cleaning operation to discharge remaining samples from within the receiving space 100a of the main body part 100 to the outside. This prevents samples collected from different depths from mixing, thereby improving the accuracy of the sample collection.

Next, the controller 500 operates the sampling driving means 220 and the sampling moving means 230 so that the tool head 211 is rotated and inserted into the inner wall of the reactor 10 to a target depth from which a sample is to be collected, thereby allowing a target sample to be collected from the inner wall of the reactor 10. In addition, the sample collection operation may be completed by discharging the collected samples to the outside of the main body part 100 through the operations of the external air supply means 430 and the sample discharge means 440 of the sample discharge part 400.

Thus, in the reactor sampling device according to one embodiment, the main body part 100 is disposed such that the opening part 100b is in close contact with the inner wall of the reactor 10, and through the sampling tool part 200 arranged within the receiving space 100a of the main body part 100, samples are collected at various depths of the inner wall of the reactor 10. The samples collected from the sampling tool part 200 may be discharged to the outside of the reactor 10 through the sample discharge part 400 without mixing with contaminated water inside the reactor 10.

The present disclosure has been described with reference to the embodiments illustrated in the drawings, but these embodiments are merely illustrative, and those skilled in the art will understand that various modified embodiments and equivalent other embodiments are possible therefrom. Therefore, the scope of technical protection of the present disclosure should be determined by the technical spirit of the attached claims.

## Claims

1. A reactor sampling device for collecting samples from an inner wall of a reactor (10), the device comprising:
a main body part (100) having a receiving space (100a) and an opening part (100b) disposed to be in close contact with the inner wall;
a sampling tool part (200) disposed in the receiving space (100a) of the main body part (100) and having a tool head (211) configured to collect samples from the inner wall of the reactor (10) through the opening part (100b);
a vertical movement part (300) connected to the main body part (100) and configured to move the main body part (100) upward and downward; and
a sample discharge part (400) communicating with the receiving space (100a) and configured to discharge the samples collected by the sampling tool part (200) to the outside of the main body part (100).

2. The device of claim 1, wherein the main body part (100) is provided with an intake port (110) and a sample discharge port (120) which communicate with the receiving space (100a).

3. The device of claim 2, wherein the main body part (100) comprises an intake injection space ((110)a) that communicates with the intake port (110) and is provided with a plurality of nozzle holes (110b).

4. The device of claim 1, wherein an inner bottom of the main body part (100) comprises a discharge guide (130) provided with a downwardly inclined slope.

5. The device of claim 4, wherein the discharge guide (130) is disposed at a lower side of the opening part (100b).

6. The device of claim 1, further comprising:
a fixing part (140) connected to the main body part (100) and configured to maintain the main body part (100), which is in close contact with the inner wall of the reactor (10), in a fixed state.

7. The device of claim 6, wherein the fixing part (140) comprises:
a fixing body (141) having an adjustable length; and
a fixing driving means (142) connected to the fixing body (141) and configured to generate a driving force to adjust the length of the fixing body (141).

8. The device of claim 1, further comprising:
a sealing means (150) provided on the main body part (100) for sealing between the main body part (100) and the inner wall of the reactor (10).

9. The device of claim 1, wherein the sampling tool part (200) comprises:
a tool body (210) configured to support the tool head (211) so that the tool head (211) is rotatable, with the tool body (210) disposed in the receiving space (100a) of the main body part (100) so as to be slidably moved in a horizontal direction;
a sampling driving means (220) connected to the tool head (211) and configured to generate a driving force to rotate the tool head (211); and
a sampling moving means (230) configured to generate a driving force to cause the tool body (210) to slide within the receiving space (100a).

10. The device of claim 1, wherein the sample discharge part (400) comprises:
an intake line (410) that communicates with the receiving space (100a);
an exhaust line (420) that communicates with the receiving space (100a);
an external air supply means (430) disposed on the intake line (410) and configured to supply outside air to the receiving space (100a) of the main body part (100); and
a sample discharge means (440) disposed on the exhaust line (420) and configured to generate back pressure to discharge samples inside the receiving space (100a) of the main body part (100) through the exhaust line (420).

11. The device of claim 1, further comprising:
a controller (500) configured to control operations of the sampling tool part (200) and the sample discharge part (400).

12. The device of claim 11, wherein the controller (500) controls a depth to which the sampling tool part (200) is inserted into the inner wall of the reactor (10) according to a material of the inner wall of the reactor (10).

13. The device of claim 12, wherein the controller (500) controls
the operation of the sampling tool part (200) to adjust a depth to which the tool head (211) of the sampling tool part (200) is inserted into the inner wall of the reactor (10) when collecting samples from the inner wall of the reactor (10), and
the operation of the sample discharge part (400) to discharge the samples to the outside of the main body part (100) after the samples are completely collected from the inner wall of the reactor (10) by the tool head (211).

14. The device of claim 13, wherein the controller (500) performs a cleaning operation to discharge remaining samples from within the receiving space (100a) of the main body part (100) to the outside when collecting samples from different target depths of the inner wall of the reactor (10).
